# EUROPÄISCHE PATENTSCHRIFT

(11) **EP 2 550 168 B1**
(45) Veröffentlichungstag und Bekanntmachung des Hinweises auf die Patenterteilung: **07.05.2014**
(21) Anmeldenummer: 11708855.9
(22) Anmeldetag: 16.03.2011
(51) Int. Cl.: B60G 11/27, B60G 15/14, B60G 17/048, B60G 17/052, F16F 9/05, F16F 9/43

(54) **LUFTFEDERANORDNUNG MIT INTEGRIERTEM STEUERVENTIL**
AIR SPRING ASSEMBLY WITH INTEGRATED CONTROL VALVE
RESSORT PNEUMATIQUE AVEC VANNE INTÉGRÉE

(30) Priorität: 22.03.2010 DE 102010012346
(43) Veröffentlichungstag der Anmeldung: 30.01.2013
(73) Patentinhaber: KNORR-BREMSE Systeme für Nutzfahrzeuge GmbH, 80809 München (DE)
(72) Erfinder: VOITH, András, H-1183 Budapest (HU); TÓTH, János, H-6000 Kecskemét (HU)
(74) Vertreter: Mattusch, Gundula
(86) Internationale Anmeldenummer: PCT/EP2011/053954
(87) Internationale Veröffentlichungsnummer: WO 2011/117125

(56) Entgegenhaltungen:
- DE-A1- 4 409 252
- DE-A1- 19 649 316
- DE-C1- 10 200 553
- JP-A- 11 078 877
- JP-U- 57 155 341
- US-A- 2 361 575
- US-A- 2 488 288
- US-A- 2 978 256
- US-A- 3 552 767

## Beschreibung

Die vorliegende Erfindung betrifft Luftfederanordnungen nach der Oberbegriffe der Ansprüche 1 und 4 mit mindestens einem integrierten Steuerventil zur Beaufschlagung einer zwischen einem Außenrohr, einem Abrollrohr und einem dazwischen angeordneten Luftfederbalg gebildeten Druckkammer, wobei das Steuerventil zur Niveaueinstellung mit mehreren Schaltpositionen über ebenfalls integrierte mechanische Betätigungsmittel in Abhängigkeit des Luftfederhubs ansteuerbar ist. Beispiele solchen Luftfederanordnungen sind aus der US 2 361 575 A. bzw. aus der DE 196 49 316 A1 bekannt.

Das Einsatzgebiet der Erfindung erstreckt sich vornehmlich auf die Fahrzeugtechnik. Im Bereich des Fahrwerks von Nutzfahrzeugen kommen beispielsweise Schwingungsdämpfer zum Einsatz, die ein meist hydraulisches Dämpfungselement und eine hiermit zusammenwirkende Luftfederanordnung umfassen. Im Sinne einer integrierten Bauweise weist das Dämpfungselement üblicherweise ein Behälterrohr auf, welches mit einem Abrollrohr der Luftfeder verbunden ist, wobei das Abrollrohr über einen als Rollbalg wirkenden Luftfederbalg mit einem konzentrisch und relativ zum Abrollrohr axial beweglich angeordneten Außenrohr verbunden ist. Der Luftfederbalg, das Abrollrohr sowie das Außenrohr begrenzen eine unter Luftdruck zur Federung stehende Druckkammer.

Mit derartigen Schwingungsdämpfern ist beispielsweise die Aufhängung eines Fahrerhauses auf einem Fahrwerk eines Nutzfahrzeuges ausgestattet, um die von der Straße über die Radaufhängung in das Fahrwerk eingeleiteten Schwingungen vom Fahrerhaus weitgehend fern zu halten.

Aus der DE 44 09 252 geht eine Luftfederanordnung für ein Nutzfahrzeug hervor, bei der innenliegend ein Steuerventil zum Zu- und Abführen von Druckluft angeordnet ist, welches über ebenfalls innerhalb angeordnete mechanische Betätigungsmittel je nach Höhenniveau ansteuerbar ist. Gewöhnlich wird der Druckkammer der Luftfederanordnung Druckluft zugeführt, wenn die Luftfeder auf Mindesthöhenniveau abfällt, um die Federungseigenschaften wieder herzustellen. Eine Entlüftung der Druckkammer erfolgt dagegen, wenn das Höhenniveau der Luftfederanordnung reduziert werden soll.

Zu diesem Zweck besteht das Steuerventil bei diesem Stand der Technik aus zwei Einzelventilen, von denen eines am Außenrohr und eines am relativ zum Außenrohr beweglichen Abrollrohr angeordnet ist. Die Betätigungsmittel bestehen aus einer halbstarren Regelstange, über welche die beiden Einzelventile derart wechselseitig betätigt werden, dass das eine Einzelventil geschlossen ist, wenn das andere Einzelventil öffnet. Allerdings erscheinen die Betätigungsmittel wegen der recht großen Längserstreckung sowie der recht vielen einzelnen Bauteile recht aufwendig.

Aus der DE 102 00 553 C1 geht eine andere Luftfederanordnung hervor, bei welcher auf ein einziges Steuerventil zurückgegriffen wird, das neben einem Be- und Entlüften der innenliegenden Druckkammer auch eine mittlere Abschlussstellung realisiert. Das Steuerventil wird über ebenfalls integrierte Betätigungsmittel angesteuert, welche an einem der beiden relativ zueinander beweglichen Luftfederbaugruppen Außenrohr und Abrollrohr angreifen. Die Betätigungsmittel weisen hier eine Baulänge auf, die kürzer ist als die Hublänge der Luftfederanordnung. Ein Steuerelement ist von einer Feder gegen eine der zueinander beweglichen Luftfederbaugruppen vorgespannt, wobei das Steuerelement relativ zu den Luftfederbaugruppen schwimmend gelagert ist. Eine zweite Feder, deren Kraftrichtung gegen die erste Feder wirksam ist, bestimmt insoweit die Stellung des Steuerelementes mit. Auch in diesem Fall besitzen die Betätigungsmittel des Steuerventils zur Niveauregulierung einen recht langen Arbeitsbereich.

Es ist daher die Aufgabe der vorliegenden Erfindung eine Luftfederanordnung zu schaffen, deren Steuerventil sich mit robusten und kompaktbauenden mechanischen Betätigungsmittel präzise aktivieren lässt.

Die Aufgabe wird gemäß Anspruch 1, bzw. gemäß Anspruch 4 in zwei alternativen Ausführungsformen gelöst. Die nachfolgenden abhängigen Ansprüche geben vorteilhafte Weiterbildungen der Erfindung wieder.

Die Erfindung schließt die technische Lehre ein, dass die mechanischen Betätigungsmittel des mindestens einen Steuerventils eine seitens des Außenrohres oder Abrollrohres stirnseitig befestigte Druckfeder umfassen, welche vorzugsweise einen zentralen hydraulischen Dämpfungskörper koaxial umgibt, wobei das Ende dieser Druckfeder mit einem Betätigungsstößels eines axial gegenüberliegend am Abrollrohr bzw. Außenrohr angeordneten Steuerventil zusammenwirkt.

Der Vorteil der erfindungsgemäßen Lösung liegt insbesondere darin, dass der durch die innere Druckkammer der Luftfederanordnung zur Verfügung stehende Bauraum genutzt wird, um die mechanischen Betätigungsmittel hierin unterzubringen. Das erfindungsgemäße Steuerventil muss im Vergleich zum Arbeitsbereich nur in einem kurzen Bereich betätigt werden. Ansonsten ist das Steuerventil geschlossen oder geöffnet für die Be- bzw. Entlüftung. Mit anderen Worten konzentriert sich die erfindungsgemäße Lösung darauf, eine Druckfeder am Außenrohr oder am Abrollrohr zu fixieren und im gegenüberliegenden Bauteil, also dem Abrollrohr bzw. Außenrohr, das Steuerventil anzuordnen.

Gemäß einer ersten Ausführungsform der erfindungsgemäßen Lösung besteht das Steuerventil aus zwei getrennten 2/2-Wegeventilen bestehen. Hierbei sollte über das eine 2/2-Wegeventil die Belüftung und über das andere 2/2-Wegeventil die Entlüftung der Druckkammer erfolgen. Dabei werden die beiden-2/2-Wegeventile mit einem Höhenunterschied t zueinander in Axialrichtung gesehen innerhalb der Luftfederanordnung angeordnet, um einen Totweg zwischen der Schaltstellung Belüftung und Entlüftung zu realisieren, so dass die definierte Schaltstellung des Steuerventils sichergestellt sind. Der Betätigungsstößel des 2/2-Wegeventils der Entlüftung aus einem verschiebbaren Druckstück mit Ausgleichsfeder gebildet ist, da die mit der vorgespannten Druckfeder zusammenwirkenden Vorspannmittel nur dann nachlessen, wenn das Entlüftungsventil voll gesperrt ist. Hierdurch wird eine Beschädigung der Betätigungsmittel des Steuerventils vermieden.

Gemäß einer die Erfindung weiter verbessernden Maßnahme wird vorgeschlagen, dass der Betätigungsstößel des 2/2-Wegeventils der Belüftung oder/und der Entlüftung mindestens einen vorzugsweise als Ausnehmung gestalteten Strömungskanal aufweist, welcher eine Drosselstelle für die Beaufschlagung der Druckkammer bildet, um durch diese einfache fertigungstechnische Maßnahme eine gewünschte Durchflusscharakteristik einzustellen. Alternativ ist es jedoch auch möglich, derartige Strömungskanäle in einem Ventilteller oder im Ventilgehäuse auszubilden.

Gemäß einer zweiten Ausführungsform der mechanischen Betätigungsmittel wird vorgeschlagen, dass hier als 3/3-Wegeventil ausgebildete Steuerventil nicht drückend sondern mit einer Zugvorrichtung zu betätigen. Die Zugvorrichtung weist ein die Druckfeder umgebendes Gehäuse mit einer Stufenbohrung auf, in welchem eine Zugstange stirnseitig herausragend angeordnet ist, welche mit der innenliegenden Druckkammer zusammenwirkt. Die Zugstange kann bei einer solchen Zugvorrichtung praktisch ohne Widerstand in das Gehäuse eingedrückt werden und dann soweit herausgezogen werden, bis das innenliegend tellerförmige Ende der Zugstange stirnseitig auf die Druckfeder aufschlägt. Im weiteren Verlauf wirkt die Federkraft der vorzugsweise vorgespannten Druckfeder. Die Vorspannung kann dabei so groß sein, dass die Zugvorrichtung das Steuerventil ohne weitere Ausfederung umschalten kann. Wenn das Steuerventil umgeschaltet ist, wird die Zugvorrichtung durch die Deformation der vorgespannten Druckfeder nachlassen.

Weitere, die Erfindung verbessernden Maßnahmen werden nachstehend gemeinsam mit der Beschreibung bevorzugter Ausführungsbeispiele der Erfindung anhand der Figuren näher dargestellt. Es zeigt:
- Figur 1: einen Längsschnitt durch eine nicht erfindungsgemäße Luftfederanordnung mit mechanischen Betätigungsmitteln,
- Figur 2: einen Längsschnitt durch eine nicht erfindungsgemäße Luftfederanordnung mit mechanischen Betätigungsmitteln,
- Figur 3: einen Längsschnitt durch eine erfindungsgemäße Luftfederanordnung mit mechanischen Betätigungsmitteln in einer ersten Ausführungsform,
- Figur 4: einen Detailschnitt im Bereich des Steuerventils zur Belüftung aus Figur 3,
- Figur 5: einen Detailschnitt im Bereich des Steuerventils zur Entlüftung aus Figur 3, und
- Figur 6: einen Längsschnitt durch ein Betätigungsmittel für ein Steuerventil einer erfindungsgemäßen Luftfederanordnung in einer zweiten Ausführungsform.

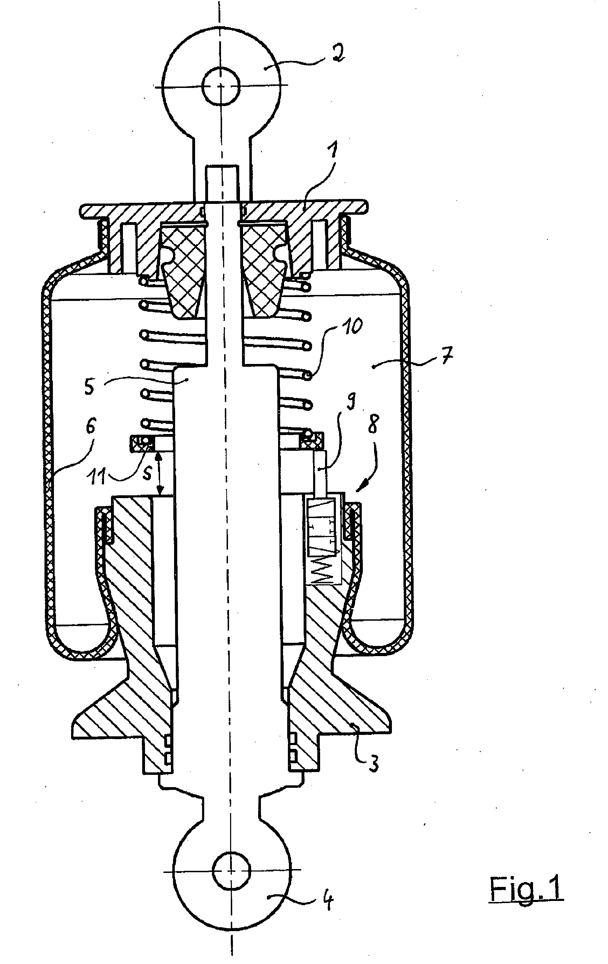

Die Luftfederanordnung nach Figur 1 besteht im Wesentlichen aus einem Außenrohr 1 mit einer oberen Befestigungsöse 2, welchem ein Abrollrohr 3 mit zugeordneter unterer Befestigungsöse 4 gegenüberliegt. Die Befestigtungsöse 4 ist hier Bestandteil eines hydraulischen Stoßdämpfers 5, welcher koaxial von dem Außenrohr 1 und dem Abrollrohr 3 umgeben ist. Zwischen dem Außenrohr 1 und dem Abrollrohr 3 verläuft ein Luftfederbalg aus einem Elastomermaterial, der sich an der Außenoberfläche des Abrollrohres 3 je nach Luftfederhub abrollt. Von dem Außenrohr 1, dem Abrollrohr 3 sowie dem Luftfederbalg 6 wird eine Druckkammer 7 gebildet, die mit Druckluft beaufschlagt die Luftfederfunktion der Luftfederanordnung erfüllt. Zur Druckbeaufschlagung der Druckkammer 7 ist ein innenliegendes Steuerventil 8 vorgesehen, welches hier als 3/3-Wegeventil ausgebildet ist und über die Schaltpositionen Entlüftung, Abschluss sowie Belüftung verfügt.

Das integrierte Steuerventil 8 wird in Abhängigkeit des Luftfederhubs von ebenfalls integrierten mechanischen Betätigungsmitteln aktiviert, welche aus einem dem Steuerventil 8 zugeordneten Betätigungsstößel 9 sowie einem gegenüberliegend seitens des Außenrohres 3 fixierten Druckfeder 10 bestehen.

Bei dieser Anordnung nimmt das Steuerventil 8 die hier ersichtliche Schaltposition Entlüftung dann einnimmt, wenn die Druckfeder 10 in ihrer ausgefahrenen entspannten Stellung den Betätigungsstößel 9 des Steuerventils 8 gerade nicht berührt. Zur Gewährleistung eines sicheren mechanischen Kontakts zwischen dem distalen Ende der Druckfeder 10 und des Betätigungsstößels 9 ist zwischen beiden Bauteilen eine Kontaktscheibe 11 vorgesehen, die seitens der Druckfeder 10 befestigt ist.

Das Steuerventil 8 gelangt in die Schaltposition Belüftung, wenn die Druckfeder 10 in der eingefahrenen Stellung entlang des Luftfederhubs den Betätigungsstößel 9 des Steuerventils 8 vollständig eingedrückt hat. Das Steuerventil 8 nimmt in dem Hubbereich s zwischen der ausgefahrenen und der eingefahrenen Stellung des Luftfederhubs die abgeschlossene Schaltposition ein, welcher der Mittelposition des Steuerventils 8 entspricht.

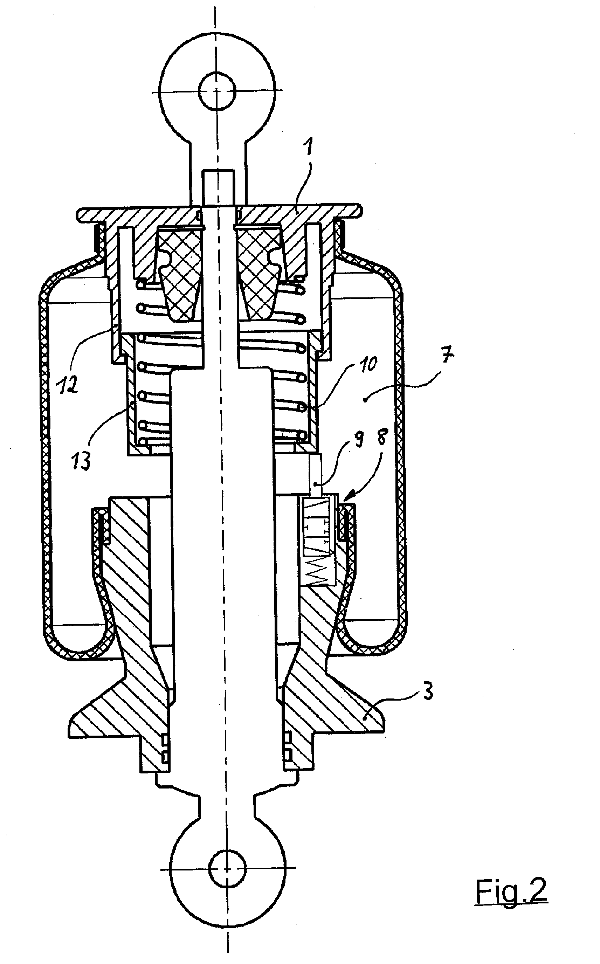

Bei der in Figur 2 dargestellten Luftfederanordnung sind Vorspannmittel für die auf den Betätigungsstößel 9 einwirkenden Druckfeder 10 vorgesehen. Die Vorspannmittel bestehen aus einem koaxial am Außenrohr 1 angeformten Rohroberteil 12, welches gemeinsam mit einem Rohrunterteil 13 eine Teleskopanordnung bildet. Am distalen Ende des Rohrunterteils 13 ist ein nach radial innen ausgerichteter Absatz zur endseitigen Abstützung der innenliegend angeordneten Druckfeder 10 vorgesehen. Die durch diese Vorspannmittel bewirkte Vorspannung ist so stark bemessen, dass die Druckfeder 10 eine Betätigung des Steuerventils 8 mit der Berührung des Betätigungsstößels 9 auslöst. Insoweit können fertigungsbedingte Toleranzen von Federparametern kompensiert werden.

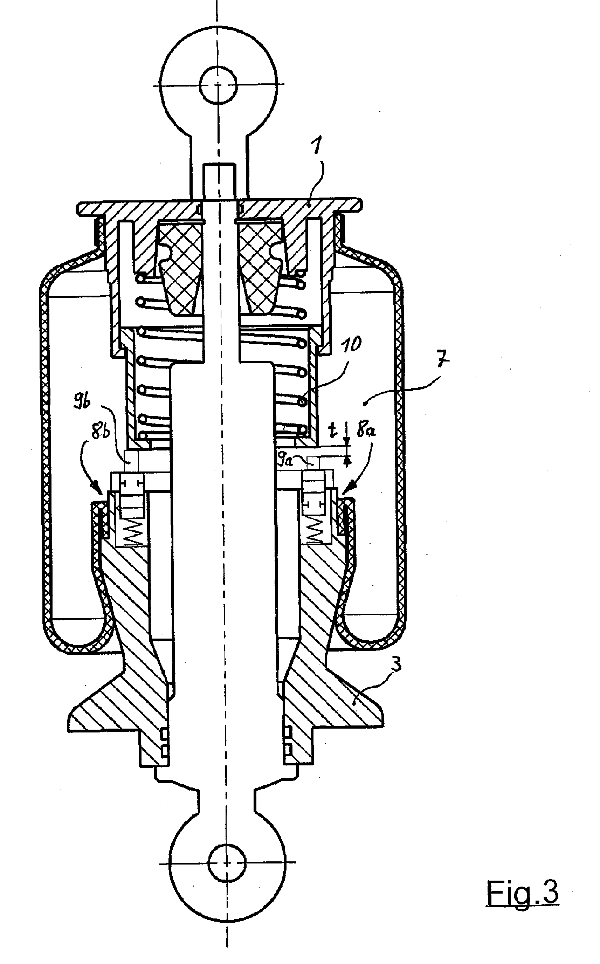

Bei der in Figur 3 dargestellten ersten Ausführungsform der erfindungsgemäßen Luftfederanordnung wird anstelle eines 3/3-Wegeventils für das Steuerventil auf zwei getrennte 2/2-Wegeventile 8a und 8b zurückgegriffen, welche beide am Abrollrohr 3 angeordnet sind. Während das eine 2/2-Wegeventil 8a exklusiv der Belüftung der Druckkammer 7 dient, ist das andere 2/2-Wegeventil 8b exklusiv zur Entlüftung der Druckkammer 7 vorgesehen. Beide 2/2-Wegeventile 8a und 8b sind dabei mit einem Höhenunterschied t relativ zueinander angeordnet, um einen der abschlossenen Schaltstellung entsprechenden Totweg zwischen der Schaltstellung Belüftung und Entlüftung zu realisieren.

Den beiden Steuerventilen 8a und 8b ist je ein Betätigungsstößel 9a bzw. 9b zugeordnet.

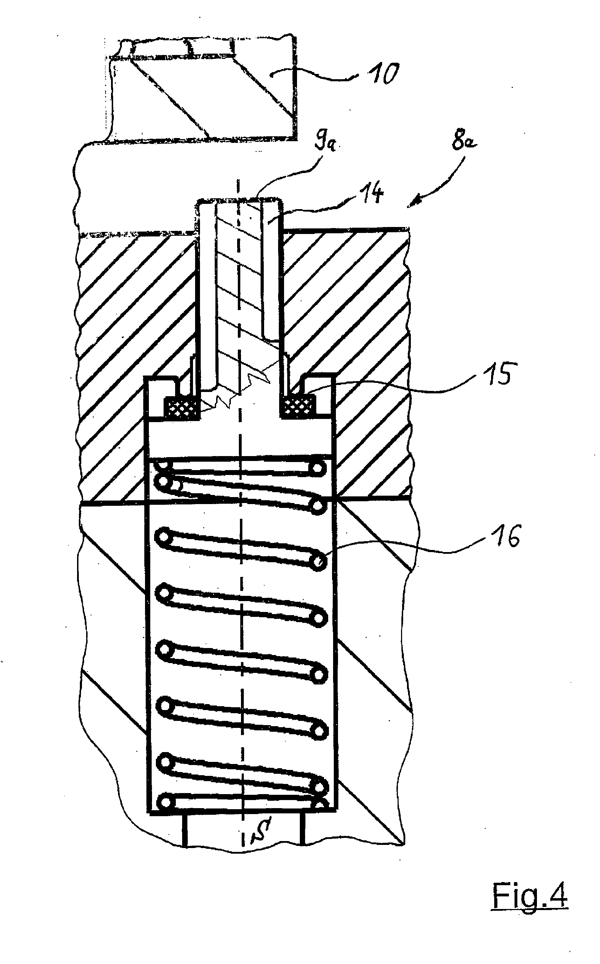

Wie in der Figur 4 für das 2/2-Wegeventil 8a der Belüftung veranschaulicht, ist im zugeordneten Betätigungsstößel 9a mindestens ein Strömungskanal 14 ausgebildet, welcher für den Belüftungsweg aus der Druckmittelversorgung (nicht dargestellt) in der Druckkammer 7 eine Drosselstelle bildet, welche gemäß den gewünschten Durchflusscharakteristik der Luftfederanordnung bemessen ist.

Die Belüftung erfolgt ausgehend von einem Speisedruckanschluss S des 2/2-Wegeventils 8a über einen Ventilsitz 15 zur Druckkammer 7. Eine Rückstellfeder 16 hält den Ventilsitz 15 in der geschlossenen Stellung, falls der Betätigungsstößel 9a nicht durch die Druckfeder 10 betätigt wird.

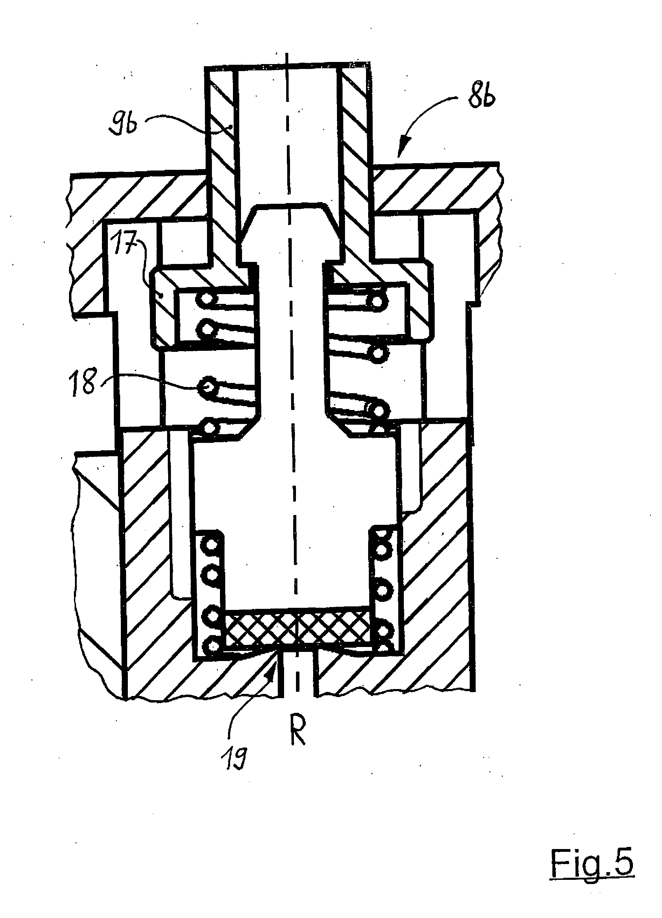

Bei der in Figur 5 dargestellten Detailansicht des 2/2-Wegeventils 8b der Entlüftung ist der Betätigungsstößel 9b aus einem in Ventilbetätigungsrichtung verschiebbaren Druckstück 17 mit sich hieran anschließender Ausgleichsfeder 18 gebildet. Zur Entlüftung strömt das Druckmittel aus der Luftfederanordnung über den Ventilsitz 19 aus der Entlüftungsöffnung R an die Atmosphäre. Es ist auch vorgesehen, mindestens ein Strömungskanal auszubilden (in der Darstellung im Gehäuse ausgebildet), um für den Entlüftungsweg aus der Druckkammer 7 an die Atmosphäre eine Drosselung zu bilden.

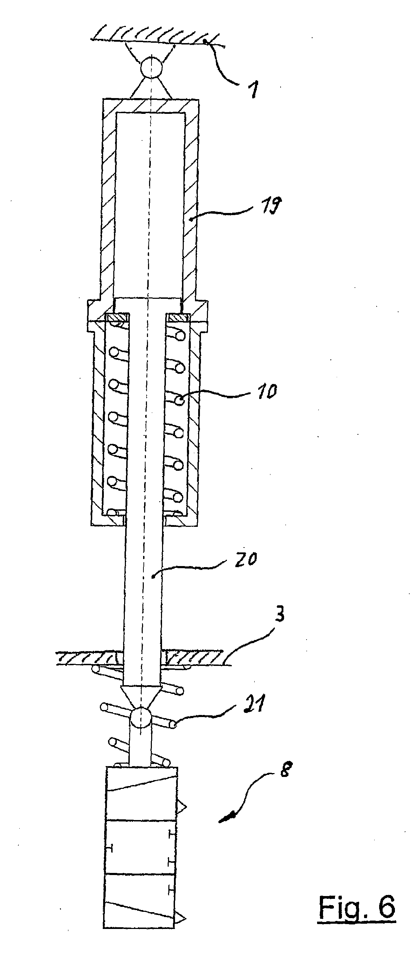

Bei der in Figur 6 dargestellten zweiten Ausführungsform der Erfindung sind die Betätigungsmittel für das hier als 3/3-Wegeventil ausgeführte Steuerventil 8 nach Art einer Zugvorrichtung ausgebildet. Die Zugvorrichtung ist seitens des Außenrohrs 1 angelenkt und besteht im Wesentlichen aus einem eine abgestufte Innenbohrung enthaltenen Gehäuse 19, welches die Druckfeder 10 enthält, die in Folge der abgestuften Bohrung vorgespannt ist. Die vorgespannte Druckfeder 10 wirkt mit einer Zugstange 20 zusammen, welche mit ihrem distalen Ende das Steuerventil 8 betätigt. Hierbei ist eine Schaltkraft zu überwinden, welche durch eine Ventilfeder 21 ausgeübt wird, die zwischen dem Steuerventil 8 und dem - hier nur schematisch dargestellten - Abrollrohr 3 angeordnet ist.

Die Erfindung ist nicht beschränkt auf die vorstehend beschriebenen Ausführungsbeispiele. Es sind vielmehr auch Abwandlungen hiervon denkbar, welche vom Schutzbereich der nachfolgenden Ansprüche mit umfasst sind. So ist beispielsweise auch möglich, dass Steuerventil seitens des Außenrohres 1 zu positionieren und die hiermit zusammenwirkende Druckfeder 10 auf Seiten des Abrollrohres 3 zu befestigen.

### Bezugszeichenliste

- 1: Außenrohr
- 2: obere Befestigungsöse
- 3: Abrollrohr
- 4: untere Befestigungsöse
- 5: Stoßdämpfer
- 6: Luftfederbalg
- 7: Druckkammer
- 8: Steuerventil
- 9: Betätigungstößel
- 10: Druckfeder
- 11: Kontaktscheibe
- 12: Rohroberteil
- 13: Rohrunterteil
- 14: Strömungskanal
- 15: Ventilsitz
- 16: Rückstellfeder
- 17: Druckstück
- 18: Ausgleichsfeder
- 19: Gehäuse
- 20: Zugstange
- 21: Ventilfeder

- s: Hubbereich
- t: Höhenunterschied
- S: Speisedruckanschluss
- R: Entlüftungsöffnung

## Patentansprüche

1. Luftfederanordnung mit mindestens einem integrierten aus zwei getrennten 2/2-Wegeventilen (8a, 8b) gebildeten Steuerventil (8) zur Beaufschlagung einer zwischen einem Außenrohr (1), einem Abrollrohr (3) und einem diese verbindenden Luftfederbalg (6) gebildeten Druckkammer (7) mit Druckluft, wobei das Steuerventil (8) mit mehreren Schaltpositionen über ebenfalls integrierte mechanische Betätigungsmittel in Abhängigkeit des Luftfederhubs zur Niveaueinstellung ansteuerbar ist, die eine seitens des Außenrohrs (1) oder Abrollrohrs (3) stirnseitig befestigte Druckfeder (10) umfasst, deren Ende mit einem Betätigungsstößel (9) eines gegenüberliegend am Abrollrohr (3) bzw. Außenrohr (1) angeordneten Steuerventil (8) zusammenwirkt, wobei das eine 2/2-Wegeventile (8a) der Belüftung und das andere 2/2-Wegeventile (8b) der Entlüftung der Druckkammer (7) dient, wobei ferner zwischen den beiden 2/2-Wegeventilen (8a, 8b) ein Höhenunterschied (t) zur Realisierung eines Totwegs zwischen der Schaltstellung Belüftung und Entlüftung besteht,
**dadurch gekennzeichnet, dass** der Betätigungsstößel (9b) des 2/2-Wegeventils (8b) der Entlüftung aus einem verschiebbaren Druckstück (17) mit Ausgleichsfeder (18) gebildet ist.

2. Luftfederanordnung nach Anspruch 1,
**dadurch gekennzeichnet, dass** der Betätigungsstößel (9a, 9b) des 2/2-Wegeventils (8a, 8b) der Belüftung oder/und der Entlüftung mindestens einen Strömungskanal (14) zur Bildung einer Drosselstelle für die Beaufschlagung oder/und die Entleerung der Druckkammer (7) aufweist.

3. Luftfederanordnung nach Anspruch 2,
**dadurch gekennzeichnet, dass** der mindestens eine Strömungskanal in dem Gehäuse des 2/2-Wegeventils (8a, 8b) ausgebildet ist.

4. Luftfederanordnung mit mindestens einem integrierten Steuerventil (8) zur Beaufschlagung einer zwischen einem Außenrohr (1), einem Abrollrohr (3) und einem diese verbindenden Luftfederbalg (6) gebildeten Druckkammer (7) mit Druckluft, wobei das Steuerventil (8) mit mehreren Schaltpositionen über ebenfalls integrierte mechanische Betätigungsmittel in Abhängigkeit des Luftfederhubs zur Niveaueinstellung ansteuerbar ist, die eine seitens des Außenrohrs (1) oder Abrollrohrs (3) stirnseitig befestigte Druckfeder (10) umfasst, deren Ende mit einem Betätigungsstößel (9) eines gegenüberliegend am Abrollrohr (3) bzw. Außenrohr (1) angeordneten Steuerventil (8) zusammenwirkt,
**dadurch gekennzeichnet, dass** das Steuerventil (8) als ein 3/3 Wegventil ausgebildet ist und über eine Zugvorrichtung, umfassend ein zylindrisches Gehäuse (19) mit innenliegender Druckfeder (10) und stirnseitig herausragender Zugstange (20) eine ziehende Betätigung des Steuerventils (8) realisiert.

5. Luftfederanordnung nach Anspruch 4,
**dadurch gekennzeichnet, dass** die Schaltkraft des Steuerventils (8) durch eine zwischen Abrollrohr (3) oder Außenrohr (1) und dem Steuerventil (8) angeordnete Ventilfeder (21) aufgebracht ist.

## Claims

1. Air spring arrangement with at least one integrated control valve (8) formed from two separate 2/2-way valves (8a, 8b) for charging a pressure chamber (7) between an outer tube (1), a rolling tube (3) and an air spring bellows (6) connecting them with compressed air, wherein the control valve (8) with multiple switching positions can be controlled for level adjustment via likewise integrated mechanical actuating means depending on the air spring stroke, which mechanical actuating means comprises a compression spring (10) attached at the end to the outer tube (1) or the rolling tube (3), the compression spring end working in conjunction with an actuating plunger (9) of a control valve (8) arranged opposite thereto on the rolling tube (3) or the outer tube (1), wherein one 2/2-way valve (8a) is used for air supply to the pressure chamber (7)and the other 2/2-way valve (8b) is used for air removal from the pressure chamber (7), wherein furthermore there is a height difference (t) between the two 2/2-way valves (8a, 8b) in order to achieve a dead zone between the air supply and air removal switching positions,
**characterized in that** the actuating plunger (9b) of the 2/2-way valve (8b) for air removal is formed by a displaceable pressure part (17) with a compensation spring (18).

2. Air spring arrangement according to Claim 1,
**characterized in that** the actuating plunger (9a, 9b) of the 2/2-way valve (8a, 8b) for air supply or/and air removal comprises at least one flow channel (14) for forming a restriction point for the charging or/and emptying of the pressure chamber (7).

3. Air spring arrangement according to Claim 2,
**characterized in that** the at least one flow channel is formed in the housing of the 2/2-way valve (8a, 8b).

4. The air spring arrangement with at least one integrated control valve (8) for charging a pressure chamber (7) between an outer tube (1), a rolling tube (3) and an air spring bellows (6) connecting them with compressed air, wherein the control valve (8) with multiple switching positions can be controlled for level adjustment via likewise integrated mechanical actuating means depending on the air spring stroke, which mechanical actuating means comprises a compression spring (10) attached at the end to the outer tube (1) or the rolling tube (3), the compression spring end working in conjunction with an actuating plunger (9) of a control valve (8) arranged opposite thereto on the rolling tube (3) or the outer tube (1),
**characterized in that** the control valve (8) is formed as a 3/3-way valve and achieves a pulling operation of the control valve (8) using a pulling device comprising a cylindrical housing (19) with an internal compression spring (10) and a pull rod (20) protruding at the end.

5. Air spring arrangement according to Claim 4,
**characterized in that** the switching force of the control valve (8) is applied by a valve spring (21) disposed between the rolling tube (3) or the outer tube (1) and the control valve (8).

## Revendications

1. Agencement de ressort pneumatique comprenant au moins une vanne (8) pilote intégrée, formée de deux vannes (8a, 8b) à 2/2 voies distinctes, pour l'alimentation en air comprimé d'une chambre (7) sous pression, formée entre un tube (1) extérieur, un tube (3) de déroulement et un soufflet (6) à ressort pneumatique les mettant en communication, la vanne (8) pilote pouvant être pilotée pour le réglage de niveau, en ayant plusieurs positions de commutation, par un moyen d'actionnement mécanique également intégré, en fonction de la course du ressort pneumatique, qui comprend un ressort (10) de compression fixé au côté frontal du côté du tube (1) extérieur ou du tube (3) de déroulement, ressort dont l'extrémité coopère avec un poussoir (9) d'actionnement d'une vanne (8) pilote montée en opposition sur le tube (3) de déroulement ou sur le tube (1) extérieur, dans lequel la une vanne (8a) à 2/2 voies sert à l'alimentation en air et l'autre vanne (8b) à 2/2 voies à la mise à l'atmosphère de la chambre (7) sous pression, dans lequel en outre, il y a, entre les deux vannes (8a, 8b) à 2/2 voies, une différence (t) de niveau pour la réalisation d'un trajet mort entre la position de commutation alimentation en air et mise à l'atmosphère,
**caractérisé en ce que** le poussoir (9b) d'actionnement de la vanne (8b) à 2/2 voies de la mise à l'atmosphère est formé d'une pièce (17) d'application d'une pression, coulissante et ayant un ressort (18) de compensation.

2. Agencement de ressort pneumatique suivant la revendication 1,
**caractérisé en ce que** le poussoir (9a, 9b) d'actionnement de la vanne (8a, 8b) à 2/2 voies de l'alimentation en air ou/et de la mise à l'atmosphère a au moins un canal (14) d'écoulement pour alimenter ou/et vider la chambre (7) sous pression.

3. Agencement de ressort pneumatique suivant la revendication 2,
**caractérisé en ce que** le au moins un canal d'écoulement est formé dans le corps de la vanne (8a, 8b) à 2/2 voies.

4. Agencement de ressort pneumatique comprenant au moins une vanne (8) pilote intégrée, formée de deux vannes (8a, 8b) à 2/2 voies distinctes, pour l'alimentation en air comprimé d'une chambre (7) sous pression, formée entre un tube (1) extérieur, un tube (3) de déroulement et un soufflet (6) à ressort pneumatique les mettant en communication, la vanne (8) pilote pouvant être pilotée pour le réglage de niveau, en ayant plusieurs positions de commutation, par un moyen d'actionnement mécanique également intégré, en fonction de la course du ressort pneumatique, qui comprend un ressort (10) de compression fixé au côté frontal du côté du tube (1) extérieur ou du tube (3) de déroulement, ressort dont l'extrémité coopère avec un poussoir (9) d'actionnement d'une vanne (8) pilote montée en opposition sur le tube (3) de déroulement ou sur le tube (1) extérieur,
**caractérisé en ce que** la vanne (8) pilote est constituée sous la forme d'une vanne à 3/3 voies et réalise, par un dispositif de traction comprenant une enveloppe (19) cylindrique à ressort (10) intérieur de compression et un tirant (20) sortant du côté frontal, un actionnement en traction de la vanne (8) pilote.

5. Agencement de ressort pneumatique suivant la revendication 4,
**caractérisé en ce que** la force de commutation de vanne (8) pilote est appliquée par un ressort (21) de vanne, monté entre le rouleau (3) de déroulement ou le rouleau (1) extérieur et la vanne (8) pilote.
